(19) Europäisches Patentamt
European Patent Office
Office européen des brevets

(11) **EP 4 013 116 A1**

(12) **EUROPEAN PATENT APPLICATION**
published in accordance with Art. 153(4) EPC

(43) Date of publication:
**15.06.2022 Bulletin 2022/24**

(21) Application number: **19941709.8**

(22) Date of filing: **09.08.2019**

(51) International Patent Classification (IPC):
*H04W 36/00* (2009.01)

(52) Cooperative Patent Classification (CPC):
**H04W 36/00**

(86) International application number:
**PCT/CN2019/100068**

(87) International publication number:
**WO 2021/026694 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• YOU, Xin
  **Dongguan, Guangdong 523860 (CN)**
• LU, Qianxi
  **Dongguan, Guangdong 523860 (CN)**

(74) Representative: **Taor, Simon Edward William et al**
**Venner Shipley LLP**
**200 Aldersgate**
**London EC1A 4HD (GB)**

(54) **WIRELESS COMMUNICATION METHOD, TERMINAL DEVICE AND NETWORK DEVICE**

(57)    Provided are a wireless communication method, a terminal device and a network device, wherein same can improve the cell selection, cell reselection or measurement performance of a terminal device. The wireless communication method comprises: a terminal device acquiring a cell list; and the terminal device performing, according to the device type thereof and the cell list, cell selection or cell reselection or measurement.

FIG. 2

**Description**

BACKGROUND OF INVENTION

Field of Invention

Embodiments of the application relate to the field of communications and, more specifically, to a wireless communication method, a terminal device, and a network device.

Description of Prior Art

In Long Term Evolution (LTE) systems and New Radio (NR) systems, terminal devices can perform cell selection, cell reselection, or cell measurement. However, cell selection, cell reselection, or cell measurement mainly designed for terrestrial terminal devices may cause uncertain effects to the performance of cell selection, cell reselection, or cell measurement of terminals such as UAVs.

SUMMARY OF INVENTION

Embodiments of the application provide a wireless communication method, a terminal device, and a network device which can improve the performance of cell selection, cell reselection, or cell measurement of the terminal device.

In a first aspect, a wireless communication method is provided, the method comprising: a terminal device obtaining a list of cells; and
the terminal device performing cell selection, cell reselection, or cell measurement based on its device type and the list of cells.

In a second aspect, a wireless communication method is provided, the method comprising: a network device sending a first message, wherein the first message comprising a list of cells, the list of cells is used to perform a cell selection or a cell reselection or a measurement.

In a third aspect, a terminal device is provided for performing the method in the first aspect or each of its embodiments.

Specifically, the terminal device comprises a functional module for performing the method in the aforementioned first aspect or each of its embodiments.

In a fourth aspect, a network device is provided for performing the method in the aforementioned second aspect or in each of its embodiments.

Specifically, the network device includes a functional module for performing the method in the second aspect or each of its embodiments.

In a fifth aspect, a terminal device is provided, comprising a processor and a memory. The memory is used to store a computer program, and the processor is used to call and run the computer program stored in the memory to execute the method in the first aspect or in each of its embodiments.

In a sixth aspect, there is provided a network device including a processor and a memory. The memory is used to store a computer program, and the processor is used to run and perform the computer program stored in the memory to perform the method in the second aspect or in each of its embodiments.

In a seventh aspect, a device is provided for implementing the method in any one of the aforementioned first to second aspects or each of the embodiments thereof.

Specifically, the device comprises a processor for calling and performing a computer program from memory to cause an apparatus in which the device is installed to perform the method as in any one of the first to second aspects or embodiments thereof described above.

In an eighth aspect, a computer-readable storage medium is provided for storing a computer program, the computer program causing a computer to perform the method of any one of the first to second aspects or embodiments thereof.

In a ninth aspect, a computer program product is provided, comprising computer program instructions, the computer program instructions causing a computer to perform the method of any one of the first to second aspects or respective embodiments thereof.

In a tenth aspect, a computer program is provided, which, when running on a computer, causes the computer to perform a method in any of the first to second aspects or respective embodiments thereof.

Through the technical solutions, a terminal device can perform cell selection, cell reselection, or cell measurement based on its device type and a list of cells. By configuring a specific list of cells for, for example, an unmanned aerial vehicle (UAV) terminal device, the drone terminal device can avoid unnecessary measurements for non-UAV cells when performing cell reselection and cell measurement, and also increase the reliability of the cell reselection/access process.

BRIEF DESCRIPTION OF DRAWINGS

FIG. 1 is a schematic diagram of a communication system architecture provided by an embodiment of the application.
FIG. 2 is a schematic flowchart of a wireless communication method provided in accordance with an embodiment of the application.
FIG. 3 is a schematic flowchart of another wireless communication method provided in accordance with an embodiment of the application.
FIG. 4 is a schematic block diagram of a terminal device provided in accordance with an embodiment of the application.
FIG. 5 is a schematic block diagram of a network device provided in accordance with an embodiment of the application.

FIG. 6 is a schematic block diagram of a communication device according to an embodiment of the application.

FIG. 7 is a schematic block diagram of a device provided in accordance with an embodiment of the application.

FIG. 8 is a schematic block diagram of a communication system provided in accordance with an embodiment of the application.

## DETAILED DESCRIPTION OF EMBODIMENTS

The technical solutions in the embodiments of the application will be described in the following in conjunction with the accompanying drawings in the embodiments of the application. It is clear that the embodiments described are some, but not all, of the embodiments of the application. All other embodiments obtained without creative labor by a person of ordinary skill in the art with respect to the embodiments in this application fall within the scope of protection of this application.

Embodiments of the application can be applied to various communication systems, such as a Global System Of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolved NR system, a system for LTE-based access to unlicensed spectrum (LTE-U), a system for NR-based access to unlicensed spectrum (NR-U), a Universal Mobile Telecommunication System (UMTS), wireless local area networks (WLAN), WIRELESS FIDELITY (Wi-Fi), next-generation communication systems, or other communication systems.

Generally speaking, a conventional communication system supports a limited number of connections and is easy to implement. However, with the development of communication technologies, a mobile communication system will support not only conventional communication but also, for example, Device-to-Device (D2D) communication, Machine-to-Machine (M2M) communication, Machine-Type Communication (MTC), and vehicle-to-vehicle (V2V) communication, etc. The embodiment of the application can also be applied to these systems.

Optionally, the communication system in an embodiment of the application can be applied in a Carrier Aggregation (CA) scenario, or in a Dual Connectivity (DC) scenario, or in a Standalone (SA) deployment scenario.

The spectrum for applying the embodiments of the application is not limited. For example, embodiments of the application can be applied to licensed spectrum or unlicensed spectrum.

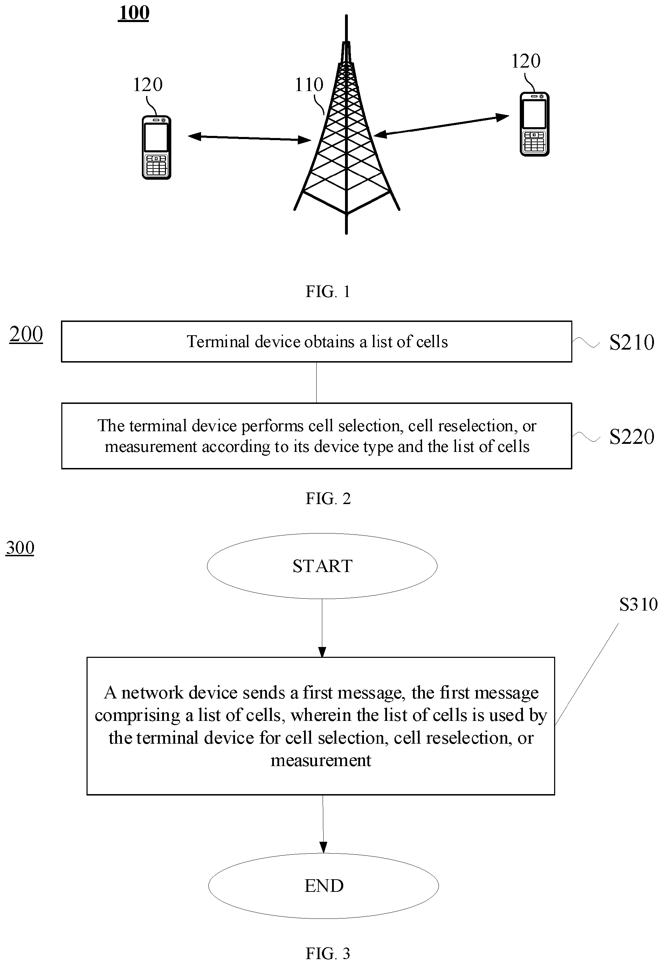

For example, the communication system 100 used in an embodiment of the application is shown in FIG. 1. The communication system 100 may include a network device 110, and the network device 110 may be a device that communicates with a terminal device 120 (or referred to as a communication terminal, or terminal). The network device 110 may provide communication coverage for a specific geographic area and may communicate with the terminal devices 120 located within that geographic area.

FIG. 1 illustrates a network device and two terminal devices. Optionally, the communication system 100 may include multiple network devices, and each network device may include an arbitrary number of terminal devices within the coverage area of each network device, which is not specifically limited in this application.

Optionally, the communication system 100 may also include other network entities such as network controllers, mobile management entities, etc., which is not limited by embodiments of the application.

It should be understood that the devices in the network/system of embodiments of the application that have communication functions may be referred to as communication devices. Taking the communication system 100 illustrated in FIG. 1 as an example, the communication devices may include network devices 110 and terminal devices 120 having communication functions. The network devices 110 and terminal devices 120 may be real devices as described above and will not be described herein. The communication devices may also include other devices in the communication system 100, such as network controllers, mobile management entities, and other network entities, which are not limited in the application.

It is to be understood that the terms "system" and "network" in the description are often interchangeably used. The term "and/or" in this paper is simply a description of the association relationship of the associated objects, indicating that three relationships can exist, e.g., A and/or B, which can mean: A alone, both A and B, and B alone. In addition, the character "/" in this paper, generally indicates that the associated objects before and after the character "/" has an "or" relationship.

Embodiments of the application describe various aspects in conjunction with a terminal device and a network device, wherein the terminal device may also be referred to as a user equipment (UE), an access terminal, a user unit, a subscriber station, a mobile station, a mobile station, a remote station, a remote terminal, a mobile device, a user terminal, a terminal, a wireless communication device, a user agent, or a user device, etc. The terminal device may be a station in a WLAN (STAION, ST), may be a cellular telephone, a cordless telephone, a Session Initiation Protocol (SIP) telephone, a Wireless Local Loop (WLL) station, a Personal Digital Assistant (PDA) devices, handheld devices with wireless communication capabilities, computing devices or other processing devices connected to a wireless modem, in-vehicle devices, wearable devices, and next-generation communication systems, such as terminal devices in NR networks or in future evolved Public Land Mobile Network (PLMN) network, etc.

By way of an example rather than a limitation, in the embodiments of the application, the terminal device may also be a wearable device. A wearable device may also be referred to as a wearable smart device, which is a general term for a device that is developed to be worn from daily wearables applied with wearable technology and intelligentization design, such as glasses, gloves, watches, clothing, and shoes. A wearable device is a portable device that can be put directly on the body or integrated into the user's clothing or accessories. A wearable device is not only a hardware device, but also a powerful function with software support as well as data interaction and cloud interaction. Broadly speaking, wearable smart devices include full-featured and large-sized devices that can achieve complete or partial functions without relying on smartphones, such as smart watches or smart glasses, as well as various types of devices, such as smart bracelets and smart jewelry, which only focus on a certain type of application, such as of physical sign monitoring, and need to be used with other devices, such as smartphones.

A network device may be a device used to communicate with a mobile device, a network device may be an Access Point (AP) in a WLAN, a Base Transceiver Station (BTS) in a GSM or CDMA, a Base Station (NodeB, NB) in a WCDMA, or an Evolutional Node B (eNB or eNodeB) in an LTE, or a repeater station or access point, or a network station in an in-vehicle device, a wearable device, and an NR network. Evolutional Node B (eNB or eNodeB) in LTE, or a relay station or access point, or a network device or a base station (gNB) in a vehicle-mounted device, a wearable device, and an NR network, or a network device in a future evolved PLMN network, etc.

In an embodiment of the application, the network device provides service to a cell, and the terminal device communicates with the network device through the transmission resources (e.g., frequency domain resources or spectrum resources) used by the cell, which may be the cell corresponding to the network device (e.g., a base station), and the cell may belong to a macro base station or a base station corresponding to a small cell. The small cells can include metro cell, micro cell, pico cell, femto cell, etc. These small cells have the characteristics of small coverage area and low transmitting power and are suitable for providing high-speed data transmission services.

In the initial cell selection, the terminal device searches for a suitable cell by scanning all the carriers in the NR frequency bands based on its own capabilities. On each carrier frequency, the terminal device only needs to search for the cell with the strongest signal, and, when obtaining one appropriate cell, selects the cell.

In the cell selection with stored information, it is necessary to save the carrier frequency information and information of cell parameters (optional). This information are obtained from the previously received measurement and control information, or from the previously measured cell. Once locating a suitable cell, the terminal device should select this cell. If no suitable cell is found, the initial cell selection should be initiated.

In cell reselection, LTE cell reselection (cell reselection) refers to a process of measuring signal quality of neighbor cells and the current serving cell in the idle mode of the terminal device and selecting the best cell to provide service signal. When the signal quality and energy level of a neighbor cell meet the S criterion (Srxlev) and satisfy certain reselection judgment criterion, the terminal will access and camp on the cell.

After successful camping, the terminal device will still perform measurements in the cell. The radio resource control (RRC) layer calculates the S criterion based on the reference signal receiving power (RSRP) measurement results and compares it with the intra-frequency measurement start-up threshold (Sintrasearch) and the inter-frequency/interRAT measurement start-up threshold (Snonintrasearch) as a judgment condition for whether to start the neighbor cell measurement.

In the idle state (IDLE) and inactive state (inactive) cell reselection R criteria and candidate cell selection, the following criteria are followed for intra-frequency and equal priority inter-frequency cell reselection:

$$Rs = Qmeas,s + Qhyst - Qoffsettemp$$

$$Rn = Qmeas,n - Qoffset - Qoffsettemp$$

where Qmeas,s is the RSRP measurement of the serving cell, Qmeas,n is the RSRP measurement of the neighbor cell, Qoffset is the offset value, Qoffsettemp is a temporary offset value, and Qhyst is a hysteresis value.

If the network device has configured a list of preferred cells (rangeToBestCell), the terminal device sorts the Rs and Rn values for the serving cell and the neighbor cells and selects the cell with the highest Rs/Rn ranking among the serving cell and the neighbor cells for cell reselection.

If the network has configured a list of preferred cells (rangeToBestCell), the terminal device, among the highest ranked plurality of cells defined by the parameter rangeToBestCell, selects the cell with the highest number of good beams for reselection. The good beams are defined by a threshold value. If there are many such cells, the terminal device reselects the one with the highest ranking.

The global market for unmanned aerial vehicles (UAVs), referred to as drones, has grown substantially over the past decade and is now an important tool for commercial, government, and consumer applications. UAVs can support solutions in many fields and can be used in a wide range of applications, including construction, oil, gas, energy, utilities, and agriculture. Currently, UAV technology is developing rapidly toward civil-military integration, and the UAV industry has been the most dynamic emerging market for international aerospace, becoming a key point for economic growth in various countries.

For the drone terminal device, it needs to perform frequent cell reselection and read system information from neighbor cells and determine whether a cell is a UAV cell. As a result, the drone terminal device performs some unnecessary measurements and cell selection or cell reselection, which affects the communication performance of the drone terminal device.

In view of the above technical problems, embodiments of the application provide a wireless communication method that, by configuring a specific list of cells for a UAV terminal, enables the UAV terminal to avoid unnecessary measurements for non-UAV cells when performing cell reselection as well as measurements, so that the reliability of the cell reselection/access process is improved.

The wireless communication schemes designed by the application for the above technical problem is detailed in the following.

FIG. 2 is a schematic flowchart of a wireless communication method 200 according to an embodiment of the application, which, as shown in FIG. 2, may include some or all of the following.

S210, the terminal device obtaining a list of cells;

S220, the terminal device performing cell selection, cell reselection, or cell measurement based on its device type and the list of cells.

Optionally, the list of cells may be configured by the network device.

For example, if the terminal device performs cell selection or cell reselection based on its device type and the list of cells, the terminal device receives a system message from the serving cell (the system message broadcast by a base station serving the serving cell), the system message including the list of cells.

The terminal device receives a system message broadcast by a base station of a current camped cell after cell selection, which carries the list of cells.

The list of cells is carried in the system message, such as the System Information Block (SIB) 3, as.

Also, for example, the terminal device performs a measurement based on its device type and the list of cells, and the terminal device receives measurement configuration information from the network device, and the measurement configuration information includes the list of cells.

It is noted that the measurement may be a mobility measurement indicative of a connected-state terminal device. The measurement configuration information may also include some other information, such as a measurement object configuration including cell frequency points, subcarrier spacings, reference signal types, etc., and such as a measurement report configuration including events or thresholds that trigger the measurement, etc.

Optionally, the list of cells may also be pre-configured for the terminal device. That is, the terminal device may have the list of cells stored therein.

Optionally, the list of cells may also be stored by the terminal device. For example, the terminal device is configured with such a list of cells before shutdown, and when the terminal device reboots after the shutdown, the terminal device may perform cell selection based on the list of cells.

Optionally, the list of cells may include a list of drone cells (drone cell list) and/or a list of terrestrial cells.

For example, where the list of cells includes a list of drone cells, the list of drone cells may, for example, include at least one of a drone cell deletion list, a drone cell addition or modification list, and a drone cell update list.

Similarly, where the list of cells includes a list of terrestrial cells, the list of terrestrial cells may, for example, include at least one of a terrestrial cell deletion list, a terrestrial cell addition or modification list, and a terrestrial cell update list.

Optionally, the device type of the terminal device may be a drone terminal device or a ground terminal device.

Optionally, the device type of the terminal device is determined by at least one of the following:

determined by the terminal device;
determined by network authentication;
determined based on the altitude of the terminal device;
determined based on an operation mode of the terminal device; and
configured by the network device.

For example, the device type of the terminal device may be written in a Subscriber Identity Module (SIM) card, and the terminal device may determine the device type of the terminal device by reading the SIM card. Optionally, the non-access stratum (NAS) of the terminal device notifies the access stratum (AS) of the terminal device after confirming the device type of the terminal device.

It is noted that in some scenarios, the device type of this terminal device may change. For example, the device type of the terminal device may change when the altitude of the terminal device changes. Alternatively, the device type of the terminal device may change when a flight mode of the terminal device changes.

For example, if the altitude of the terminal device is greater than a first threshold, the device type of the terminal device is a drone terminal device; or, if the altitude of the terminal device is less than or equal to the first threshold, the device type of the terminal device is a ground terminal device.

Also, for example, if the terminal device is in a take-off mode and/or a landing mode, the device type of the terminal device is a ground terminal device. Alternatively, if the terminal device is in a horizontal flight mode, the device type of the terminal device is a drone terminal device.

It is noted that the first threshold may be pre-configured by the network device, or, the first threshold may be agreed upon by the protocol, or the first threshold may be determined by the terminal device itself.

Optionally, in embodiments of the application, the foregoing step S220 may specifically comprise the following:

the terminal device determining at least one neighbor cell based on its device type and the list of cells, the at least one neighbor cell being used for cell selection or cell reselection, or, the at least one neighbor cell being used for measurement;

the terminal device selects a neighbor cell among the at least one neighbor cell for cell selection or cell reselection, or, the terminal device performs a measurement on the at least one neighbor cell.

Specifically, the at least one neighbor cell may be determined by the following means:

if the device type of the terminal device is a drone terminal device, the terminal device determines the at least one neighbor cell among the cells in the list of drone cells, or, the terminal device determines the at least one neighbor cell among the cells other than the cells in the list of terrestrial cells; or

if the device type of the terminal device is a ground terminal device, the terminal device identifies the at least one neighbor cell among the cells in the list of terrestrial cells, or, the terminal device identifies the at least one neighbor cell among the cells other than the cells in the list of drone cells.

Optionally, if the device type of the terminal device is a ground terminal device, the terminal device determines the at least one neighbor cell among the cells other than the cells in the list of drone cells and the cells in an intra-frequency reselection black cell list (intraFreq-BlackCellList).

Optionally, in an embodiment of the application, the terminal device enables the cell reselection process when channel quality of the neighbor cell is higher than channel quality of the serving cell.

Optionally, in the embodiment of the application, the terminal device selects a neighbor cell with the best channel quality among the at least one neighbor cell for cell selection or cell reselection.

For example, for the drone terminal device, if the network device is not configured with a list of preferred cells, the drone terminal device sorts the serving cell and the neighbor cells in order of channel quality from best to worst, and selects the cell with a drone cell identifier and the highest ranking for cell selection or cell reselection.

Also, for example, for a drone terminal device, if the network device is not configured with a preferred list of cells, the drone terminal device sorts the cells in the list of drone cells in order of channel quality from best to worst, and selects the cell with the highest ranking for cell selection or cell reselection.

Optionally, in an embodiment of the application, the terminal device selects a first neighbor cell among the at least one neighbor cell for cell selection or cell reselection, wherein the first neighbor cell is the highest ranked cell in the list of preferred cells among the at least one neighbor cell.

Optionally, the list of preferred cells (rangeTo-BestCell) is configured for the network device.

For example, for a drone terminal device, the drone terminal device selects the cell with the drone cell identifier and the highest ranking for cell selection or cell reselection in that preferred list of cells.

Optionally, if the terminal device performs cell selection or cell reselection based on its device type and the list of cells, the terminal device needs to measure the channel quality of the serving cell and that at least one neighbor cell.

Optionally, in embodiments of the application, the terminal device has a plurality of device types, and the terminal device can perform cell selection, cell reselection, or cell measurement based on its current device type and the list of cells.

Optionally, in embodiments of the application, if the terminal device is in an idle state or an inactive state, the terminal device performs cell selection or cell reselection based on its device type and the list of cells; or, if the terminal device is in a connected state, the terminal device performs measurement based on its device type and the list of cells.

Thus, in an embodiment of the application, the terminal device can perform cell selection, cell reselection, or cell measurement based on its device type and list of cells, and by configuring a specific list of cells for, for example, a drone terminal device, the drone terminal device can avoid unnecessary measurements for non-UAV cells when performing cell reselection and cell measurement, and also increase the reliability of the cell reselection/access process.

FIG. 3 is a schematic flow diagram of a wireless communication method 300 according to an embodiment of the application. As shown in FIG. 3, the method 300 may include some or all of the following.

S310, the network device sends a first message, the first message comprising a list of cells, wherein the list of cells is used by the terminal device for cell selection, cell reselection, or cell measurement.

Optionally, the list of cells includes a list of drone cells (a drone cell list) and/or a list of terrestrial cells.

For example, where the list of cells includes a list of drone cells, the list of drone cells may, for example, include at least one of a drone cell deletion list, a drone cell addition or modification list, and a drone cell update list.

Similarly, where the list of cells includes a list of terrestrial cells, the list of terrestrial cells may, for example, include at least one of a terrestrial cell deletion list, a terrestrial cell addition or modification list, and a terrestrial cell update list.

Optionally, the network device broadcasts the first message, the first message being a system message. Optionally, the list of cells is used by the terminal device for cell selection or cell reselection.

For example, for UE 1, the network device may be a base station of the cell in which the UE 1 currently camps. The network device carries the list of cells in the system message, such as SIB 3, and the UE 1 may perform cell selection or cell reselection based on its device type and the list of cells.

Optionally, the network device sends the first message to the terminal device, where the first message is measurement configuration information. Optionally, the list of cells is used for the terminal device to perform measurements in conjunction with its device type.

It is noted that the measurement may be a mobility measurement indicative of a connected state terminal device. The measurement configuration information may also include some other information, such as a measurement object configuration including cell frequency points, subcarrier spacings, reference signal types, etc., and such as a measurement report configuration including events or thresholds that trigger the measurement, etc.

Optionally, the device type of the terminal device comprises a drone terminal device and/or a ground terminal device.

Optionally, the device type of the terminal device is determined by at least one of the following:

determined by the terminal device;
determined by network authentication;
determined based on the altitude of the terminal device;
determined based on an operation mode of that terminal device; and
configured by the network device.

For example, the device type of the terminal device may be written in a SIM card, which may be read by the terminal device to determine the device type of the terminal device. Optionally, the non-access stratum (NAS) of the terminal device confirms the device type of the terminal device and notifies the access stratum (AS) of the terminal device.

It is noted that in some scenarios, the device type of the terminal device may change. For example, the device type of the terminal device may change when the altitude of the terminal device changes; or, the device type of the terminal device may change when the flight mode of the terminal device changes.

For example, if the terminal device has an altitude greater than the first threshold, the device type of the terminal device is a drone terminal device; or, if the terminal device has an altitude less than or equal to the first threshold, the device type of the terminal device is a ground terminal device.

Also, for example, if the terminal device is in a take-off mode and/or a landing mode, the device type of the terminal device is a ground terminal device; or, if the terminal device is in a horizontal flight mode, the device type of the terminal device is a drone terminal device.

It is noted that the first threshold may be pre-configured by the network device, or, the first threshold is agreed upon by the protocol, or, the first threshold is determined by the terminal device itself.

Optionally, in embodiments of the application, the list of cells is used for the terminal device to perform cell selection or cell reselection if the terminal device is in an idle state or an inactive state; or, the list of cells is used for the terminal device to perform cell measurement if the terminal device is in a connected state.

Thus, in an embodiment of the application, the network device configures the list of cells, so that the terminal device can perform cell selection, cell reselection, or cell measurement based on its device type and list of cells, and by configuring a specific list of cells for, for example, a drone terminal device, the drone terminal device can avoid unnecessary measurements for non-UAV cells when performing cell reselection and measurements, and also increases the reliability of the cell reselection/access process.

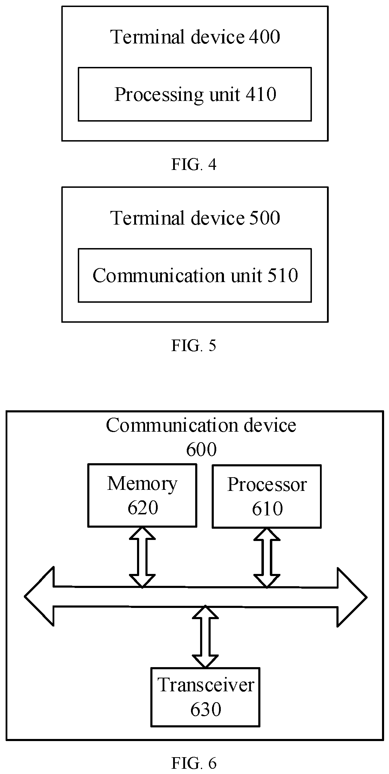

FIG. 4 illustrates a schematic block diagram of a terminal device 400 according to an embodiment of the application. As shown in FIG. 4, the terminal device 400 includes:

a processing unit 410 for obtaining a list of cells;
the processing unit 410 is further used to perform cell selection, cell reselection, or cell measurement based on its device type and this list of cells.

Optionally, the processing unit 410 is specifically configured to:

determine at least one neighbor cell based on its device type and the list of cells, the at least one neighbor cell is used for cell selection or cell reselection, or, the at least one neighbor cell is used for measurement;
select a neighbor cell among the at least one neighbor cell for cell selection or cell reselection, or, the terminal device performs a measurement on the at least one neighbor cell.

Optionally, the list of cells comprises a list of drone cells and/or a list of terrestrial cells.

The processing unit 410 is specifically configured to:

if the device type of the terminal device 400 is a drone terminal device, determine the at least one neighbor cell among the cells in the list of drone cells, or, determine the at least one neighbor cell among the cells other than the cells in the list of terrestrial cells; or

if the device type of the terminal device 400 is a ground terminal device, identify the at least one neighbor cell among the cells in the list of terrestrial cells, or, identify the at least one neighbor cell among the cells other than the cells in the list of drone cells, or, determining the at least one neighbor cell among the cells other than the cells in the list of drone cells and the cells in the intra-frequency reselection black cell list.

Optionally, where the list of cells includes a list of drone cells, the list of drone cells includes at least one of a drone cell deletion list, a drone cell addition or modification list, and a drone cell update list.

Optionally, where the list of cells includes a list of terrestrial cells, the list of terrestrial cells includes at least one of a terrestrial cell deletion list, a terrestrial cell addition or modification list, and a terrestrial cell update list.

Optionally, the processing unit 410 is specifically configured to:

select a neighbor cell with the best channel quality among the at least one neighbor cell for cell selection or cell reselection.

Optionally, the processing unit 410 is specifically configured to:

selecting a first neighbor cell among the at least one neighbor cell for cell selection or cell reselection, wherein the first neighbor cell is the cell in the at least one neighbor cell that is highest ranked in the list of preferred cells.

Optionally, the list of preferred cells is configured for the network device.

Optionally, if the terminal device 400 performs cell selection or cell reselection based on its device type and the list of cells, the processing unit 410 is also configured to measure channel quality of the serving cell and the at least one neighbor cell.

Optionally, the terminal device 400 has a plurality of device types.

The processing unit 410 is specifically configured to:

perform cell selection, cell reselection, or cell measurement based on its current device type and the list of cells.

Optionally, the device type of the terminal device 400 includes a drone terminal device and/or a ground terminal device.

Optionally, the device type of the terminal device 400 is determined by at least one of the following:

determined by the terminal device 400;
determined by network authentication;

determined based on the altitude of the terminal device 400;
determined based on an operation mode of that terminal device 400; and
configured by the network device.

Optionally, if the terminal device 400 has an altitude greater than the first threshold, then the terminal device 400 has a device type of a drone terminal device; or
if the altitude of the terminal device 400 is less than or equal to the first threshold, then the device type of the terminal device 400 is a ground terminal device.

Optionally, if the terminal device 400 is in a take-off mode and/or a landing mode, the device type of the terminal device 400 is a ground terminal device; or
if the terminal device 400 is in a horizontal flight mode, the device type of the terminal device 400 is a drone terminal device.

Optionally, if the terminal device 400 is in an idle state or an inactive state, the terminal device 400 performs cell selection or cell reselection based on its device type and the list of cells; or
if such terminal device 400 is in a connected state, such terminal device 400 performs a measurement based on its device type and the list of cells.

Optionally, if the terminal device 400 performs cell selection or cell reselection based on its device type and the list of cells, the terminal device 400 further comprising:

a communication unit 420 for receiving a system message of the serving cell, the system message including the list of cells.

Optionally, the list of cells is pre-configured.

It should be understood that the terminal device 400 according to embodiments of the application may correspond to the terminal device in the method embodiments of the application, and that the above and other operations and/or functions of the various units in the terminal device 400 are respectively intended to implement the corresponding processes of the terminal device in the method 200 shown in FIG. 2, and are not repeated herein for brevity.

FIG. 5 illustrates a schematic block diagram of a network device 500 according to an embodiment of the application. As shown in FIG. 5, the network device 500 includes:

a communication unit 510 for sending a first message, the first message comprising a list of cells, wherein the list of cells is used by the terminal device for cell selection, cell reselection, or cell measurement.

Optionally, the list of cells comprises a list of drone cells and/or a list of terrestrial cells.

Optionally, the list of drone cells comprises at least one of a drone cell deletion list, a drone cell addition or modification list, and a drone cell update list.

Optionally, the list of terrestrial cells includes at least one of a terrestrial cell deletion list, a terrestrial cell addition or modification list, and a terrestrial cell update list.

Optionally, the communication unit 510 is specifically configured to:

broadcast the first message, the first message being a system message.

Optionally, the list of cells is used for cell selection or cell reselection by the terminal device.

Optionally, the communication unit 510 is specifically used for:

sending the first message to the terminal device, where the first message is measurement configuration information.

Optionally, the list of cells is used for the terminal device to perform measurements in conjunction with its device type.

Optionally, the device type of the terminal device comprises a drone terminal device and/or a ground terminal device.

Optionally, the device type of the terminal device is determined by at least one of the following:

determined by the terminal device;
determined by network authentication;
determined based on the altitude of the terminal device;
determined based on an operation mode of that terminal device; and
configured by the network device 500.

Optionally, if the terminal device has an altitude greater than the first threshold, then the device type of the terminal device is a drone terminal device; or
if the altitude of the terminal device is less than or equal to the first threshold, then the device type of the terminal device is a ground terminal device.

Optionally, if the terminal device is in a take-off mode and/or a landing mode, then the device type of the terminal device is a ground terminal device; or
if the terminal device is in a horizontal flight mode, the device type of the terminal device is a drone terminal device.

Optionally, if the terminal device is in an idle state or an inactive state, the list of cells is used for cell selection or cell reselection by the terminal device; or
if the terminal device is in the connected state, the list of cells is used for cell measurement by the terminal device.

It is to be understood that the network device 500 according to the embodiments of the application may correspond to the network device in the method embodiments of the application, and that the above and other operations and/or functions of the individual units in the network device 500 are respectively intended to implement the corresponding processes of the network device in the method 300 shown in FIG. 3, which are not repeated herein for brevity.

FIG. 6 is a schematic structural diagram of a communication device 600 provided in an embodiment of the application. The communication device 600 shown in FIG. 6 includes a processor 610 that can call and run a computer program from memory to implement the method in the embodiments of the application.

Optionally, as shown in FIG. 6, the communication device 600 may also include a memory 620. In particular, the processor 610 may call and run a computer program from the memory 620 to implement the method in the embodiment of the application.

In particular, the memory 620 may be a separate device from the processor 610 or may be integrated into the processor 610.

Optionally, as shown in FIG. 6, the communication device 600 may also include a transceiver 630, which the processor 610 may control to communicate with other devices, specifically, to send information or data to, or receive information or data from other devices.

The transceiver 630 may include a transmitter and a receiver. Transceiver 630 may further include an antenna, and the number of antennas may be one or more.

Optionally, the communication device 600 may specifically be a network device or a base station of the embodiment of the application, and the communication device 600 may implement the corresponding processes implemented by the network device or the base station in each of the methods of the embodiments of the application, which will not be repeated herein for brevity.

Optionally, the communication device 600 may specifically be a mobile terminal/terminal device of the embodiment of the application, and the communication device 600 may implement the corresponding processes implemented by the mobile terminal/terminal device in each of the methods of the embodiments of the application, which will not be repeated herein for brevity.

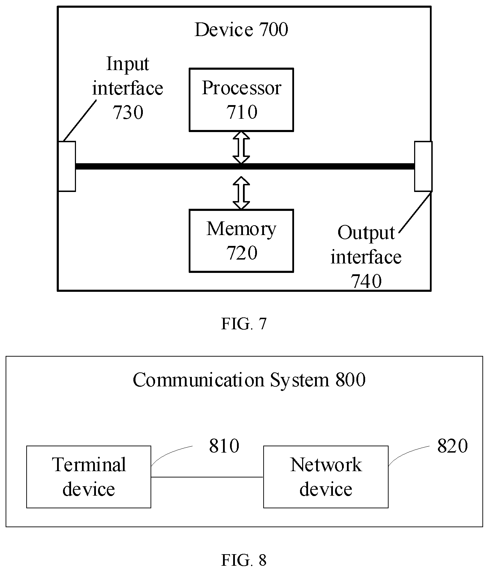

FIG. 7 is a schematic structural view of the device of an embodiment of the application. The device 700 shown in FIG. 7 includes a processor 710 that can call and run a computer program from memory to implement the method in the embodiment of the application.

Optionally, as shown in FIG. 7, the device 700 may further include a memory 720. The processor 710 may call and run a computer program from the memory 720 to implement the method in the embodiments of the application.

In particular, the memory 720 may be a separate device from the processor 710 or may be integrated into the processor 710.

Optionally, the device 700 may further include an input interface 730. In particular, the processor 710 may control the input interface 730 to communicate with other devices or chips, specifically, to obtain information or data sent by other devices or chips.

Optionally, the device 700 may further include an output interface 740. The processor 710 may control the output interface 740 to communicate with other devices or chips, specifically, to output information or data to other devices or chips.

Optionally, the device may be applied to a network device or base station in embodiments of the application, and the device may implement corresponding processes implemented by the network device or base station in various methods of embodiments of the application, which will not be described herein for brevity.

Optionally, the device may be applied to the mobile terminal/terminal device in the embodiments of the application, and the device may implement the corresponding processes implemented by the mobile terminal/terminal device in the various methods of the embodiments of the application, which will not be repeated herein for brevity.

Optionally, the device referred to in embodiments of the application may also be a chip. For example, it may be a system integrated in one chip, a system chip, a chip system, or a system-on-a-chip (SoC), etc.

FIG. 8 is a schematic block diagram of a communication system 800 provided by an embodiment of the application. As shown in FIG. 8, the communication system 800 includes a terminal device 810 and a network device 820.

The terminal device 810 may be configured to implement the corresponding functions implemented by the terminal device in the method described above, and the network device 820 may be configured to implement the corresponding functions implemented by the network device or base station in the method described above, which will not be repeated herein for the sake of brevity, this.

It should be understood that the processor of the embodiments of the application may be an integrated circuit chip with signal processing capabilities. In implementations, the steps of the aforementioned method embodiments may be accomplished by integrated logic circuitry in the form of hardware in the processor or by instructions in the form of software. The processor described above may be a general purpose processor, a Digital Signal Processor (DSP), an Application Specific Integrated Circuit (ASIC), a Field Programmable Gate Array (FPGA), or other programmable logic device, discrete gate or transistor logic device, or discrete hardware component. Each of the disclosed methods, steps, and logical block diagrams of the embodiments of this application may be implemented or performed. The general purpose processor may be a microprocessor, or the processor may also be any conventional processor, etc. The steps of the method disclosed in combination with the embodiments of the application can be directly embodied as performed by a hardware decoding processor or performed with a combination of hardware and software modules in the decoding processor. The software module can be located in random memory, flash memory, read-only memory, programmable read-only memory or electrically rewritable programmable memory, registers, and other storage media well established in the art. The storage medium is located in the memory and the processor reads the information in the memory and completes the steps of the method in combination with its hardware.

It will be appreciated that the memory in embodiments of the application may be a volatile memory or non-volatile memory or may include both volatile and non-volatile memory. Among these, the non-volatile memory may be Read-Only Memory (ROM), Programmable ROM (PROM), Erasable Programmable Read-Only Memory (EPROM), Electrically Erasable Programmable Read-Only Memory (EPROM), Electrically EPROM, EEPROM), or flash memory. The volatile memory may be Random Access Memory (RAM), which is used as an external cache. By way of example but not limitation, many types of RAM are available, such as Static RAM (SRAM), Dynamic RAM (DRAM), Synchronous DRAM (SDRAM), Double Data Rate Synchronous Dynamic Random Access memory (Double Data Rate SDRAM, DDR SDRAM), Enhanced SDRAM (ESDRAM), Synchlink DRAM (SLDRAM), and Direct Rambus RAM (DR RAM). It should be noted that the memories of the systems and methods described herein are intended to include, but are not limited to, these and any other suitable types of memories.

It should be understood that the above memories are exemplary but not limiting descriptions. For example, the memories in embodiments of the application may also be static random access memory (static RAM, SRAM), dynamic random access memory (dynamic RAM, DRAM), synchronous DRAM SDRAM), double data rate SDRAM (DDR SDRAM), enhanced SDRAM (ESDRAM), Synchlink DRAM (SLDRAM), and Direct Rambus RAM (DR RAM), and so on. That is, the memories in embodiments of the application are intended to include, but are not limited to, these and any other suitable types of memories.

Embodiments of the application also provide a computer-readable storage medium for storing a computer program.

Optionally, the computer-readable storage medium may be applied to a network device or base station in embodiments of the application, and the computer program causes a computer to perform the corresponding processes implemented by the network device or base station in various methods of the embodiments of the application, which will not be described herein for brevity.

Optionally, the computer-readable storage medium may be applied to the mobile terminal/terminal device of the embodiment of the application, and the computer program causes a computer to perform the corresponding processes implemented by the mobile terminal/terminal device in the respective methods of the embodiment of the application, which will not be repeated herein for brevity.

Embodiments of the application also provide a computer program product comprising computer program instructions.

Optionally, the computer program product may be applied to a network device or a base station in embodiments of the application, and the computer program instructions cause a computer to perform corresponding processes implemented by the network device or base station in various methods of embodiments of the application, which will not be repeated herein for brevity.

Optionally, the computer program product may be applied to the mobile terminal/terminal device of the embodiment of the application, and the computer program instructions cause a computer to perform the corresponding processes implemented by the mobile terminal/terminal device in the respective methods of the embodiment of the application, which will not be repeated herein for brevity.

Embodiments of the application also provide a computer program.

Optionally, the computer program may be applied to a network device or a base station in an embodiment of the application and, when the computer program is run on a computer, causes the computer to perform the corresponding processes implemented by the network device or base station in the respective methods of the embodiments of the application, which will not be repeated herein for brevity.

Optionally, the computer program may be applied to a mobile terminal/terminal device in an embodiment of the application such that, when the computer program is executed on a computer, the computer performs the corresponding processes implemented by the mobile terminal/terminal device in the respective methods of the embodiments of the application, which will not be repeated herein for brevity.

One of ordinary skill in the art can realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. The skilled person may use different methods to implement the described functions for each particular application, but such embodiments should not be considered outside the scope of this application.

It will be clear to those skilled in the art that, for ease and brevity of description, the specific processes of operation of the systems, devices, and units described above may be referred to the corresponding processes in the preceding method embodiments and will not be repeated herein.

In the several embodiments provided in this application, it should be understood that the disclosed systems, devices, and methods, may be implemented in other ways or forms. For example, the embodiments of the devices described above are merely schematic, e.g., the division of the units described, which is only a logical functional division, may be divided in other ways when actually implemented, e.g., multiple units or components may be combined or may be integrated into another system, or some features may be ignored, or not implemented. On another point, the mutual coupling or direct coupling or communication connection shown or discussed can be an indirect coupling or communication connection through some interface, device or unit, which can be electrical, mechanical or other forms.

The units illustrated as separate components may or may not be physically separate, and the components shown as units may or may not be physical units, i.e., they may be located in one place or may be distributed to a plurality of network units. Some or all of these units may be selected according to practical needs to achieve the purpose of solutions in the embodiments.

Alternatively, each functional unit in the various embodiments of the application may be integrated into a single processing unit, or each unit may be physically standalone, or two or more units may be integrated into a single unit.

The described functions, when implemented as software functional units and sold or used as separate products, may be stored in a computer-readable storage medium. It is understood that the technical solution of the application, or that part of the technical solution that essentially contributes to the prior art, may be embodied in the form of a software product stored in a storage medium comprising a number of instructions to cause a computer device (which may be a personal computer, a server, or a network device, etc.) to perform all or some of the steps of the method described in various embodiments of the application. All or part of the steps of the method described in each embodiment of the application. The aforementioned storage medium includes a USB flash drive, a removable hard disk, a Read-Only Memory (ROM), a Random Access Memory (RAM), a diskette, or a CD-ROM, and various other media that can store program code.

The above described are only specific embodiments of the application, but the scope of protection of the application is not limited thereto, and any variations or substitutions that can be readily thought of by any person skilled in the art within the scope of the technology disclosed in the application shall be covered by the scope of protection of the application. Therefore, the scope of protection of this application shall be stated to be subject to the scope of protection of the claims.

**Claims**

1. A wireless communication method, **characterized by** comprising:

   a terminal device obtaining a list of cells; and
   the terminal device performing cell selection, cell reselection, or cell measurement based on its device type and the list of cells.

2. The method according to claim 1, **characterized in that** the terminal device performing cell selection, cell reselection, or cell measurement based on its device type and the list of cells comprises:

the terminal device determining at least one neighbor cell based on its device type and the list of cells, the at least one neighbor cell being used for cell selection or cell reselection, or, the at least one neighbor cell being used for measurement;

the terminal device selecting a neighbor cell among the at least one neighbor cell for cell selection or cell reselection, or, the terminal device performing a measurement of the at least one neighbor cell.

3. The method according to claim 2, **characterized in that** the list of cells comprises a list of drone cells and/or a list of terrestrial cells;

the terminal device determining at least one neighbor cell based on its device type and the list of cells, comprising:

if the device type of the terminal device is a drone terminal device, the terminal device determining the at least one neighbor cell among the cells in the list of drone cells, or, the terminal device determining the at least one neighbor cell among cells other than the cells in the list of terrestrial cells; or,

if the device type of the terminal device is a ground terminal device, the terminal device determining the at least one neighbor cell among cells in the list of terrestrial cells, or, the terminal device determining at least one neighbor cell among cells other than the cells in the list of drone cells, or, the terminal device determining the at least one neighbor cell among cells other than cells in the list of drone cells and cells in an intra-frequency reselection black cell list.

4. The method according to claim 3, **characterized in that**, when the list of cells comprises a list of drone cells, the list of drone cells comprises at least one of drone cell deletion list, a drone cell addition or modification list, and a drone cell update list.

5. The method according to claim 3 or 4, **characterized in that** when the list of cells comprises a list of terrestrial cells, the list of terrestrial cells comprises at least one of a terrestrial cell deletion list, a terrestrial cell addition or modification list, and a terrestrial cell update list.

6. The method according to any of claims 2 to 5, **characterized in that** the terminal device selecting a neighbor cell among the at least one neighbor cell for cell selection or cell reselection comprises:
the terminal device selecting a neighbor cell with the best channel quality among the at least one neighbor cell for cell selection or cell reselection.

7. The method according to any of claims 2 to 5, **characterized in that** the terminal device selects a neighbor cell among the at least one neighbor cell for cell selection or cell reselection comprises:
the terminal device selecting a first neighbor cell among the at least one neighbor cell for cell selection or cell reselection, wherein the first neighbor cell is a cell with the highest ranking in a list of preferred cells among the at least one neighbor cell.

8. The method according to claim 7, **characterized in that** the list of preferred cells is configured for a network device.

9. The method according to any of claims 2 to 8, **characterized in that** if the terminal device performs cell selection or cell reselection based on its device type and the list of cells, the method further comprises:
the terminal device measuring channel quality of a serving cell and the at least one neighbor cell.

10. The method according to any of claims 1 to 9, **characterized in that** the terminal device has a plurality of device types, the terminal device performing cell selection, cell reselection, or cell measurement based on its device type and the list of cells comprises:
the terminal device performing cell selection, cell reselection, or cell measurement based on its current device type and the list of cells.

11. The method according to any of claims 1 to 10, **characterized in that** the device type of the terminal device comprises a drone terminal device and/or a ground terminal device.

12. The method according to any of claims 1 to 11, **characterized in that** the device type of the terminal device is determined by at least one of: determination by the terminal device, determination by network authentication, determination based on altitude of the terminal device, determination based on an operation mode of the terminal device, configuration by the network device.

13. The method according to claim 12, **characterized in that** if the altitude of the terminal device

is greater than a first threshold, the device type of the terminal device is a drone terminal device; or

if the altitude of the terminal device is less than or equal to a first threshold, the device type of the terminal device is a ground terminal device.

14. The method according to claim 12 or 13, **characterized in that** if the terminal device is in take-off mode and/or landing mode, the device type of the terminal device is a ground terminal device;

>    or
>    if the terminal device is in horizontal flight mode, the device type of the terminal device is a drone terminal device.

15. The method according to any of claims 1 to 14, **characterized in that**, if the terminal device is in an idle state or inactive state, the terminal device performs cell selection or cell reselection based on its device type and the list of cells; or, if the terminal device is in a connected state, the terminal device performs measurement based on its device type and the list of cells.

16. The method according to any of claims 1 to 15, **characterized in that** if the terminal device performs cell selection or cell reselection based on its device type and the list of cells, the method further comprising: the terminal device receiving a system message of a serving cell, the system message comprising the list of cells.

17. The method according to any of claims 1 to 16, **characterized in that** the list of cells is pre-configured.

18. A method for wireless communication, **characterized by** comprising: a network device sending a first message, the first message comprising a list of cells, wherein the list of cells is used for cell selection, cell reselection, or cell measurement by a terminal device.

19. The method according to claim 18, **characterized in that** the list of cells comprises a list of drone cells and/or a list of terrestrial cells.

20. The method according to claim 19, **characterized in that** the list of drone cells comprises at least one of a drone cell deletion list, a drone cell addition or modification list, and a drone cell update list.

21. The method according to claim 19 or 20, **characterized in that** the list of terrestrial cells comprises at least one of a terrestrial cell deletion list, a terrestrial cell addition or modification list, and a terrestrial cell update list.

22. The method according to any of claims 18 to 21, **characterized in that** the network device sends a first message comprising: the network device broadcasting the first message, the first message being a system message.

23. The method according to claim 22, **characterized in that** the list of cells is used by the terminal device for cell selection or cell reselection.

24. The method according to any of claims 18 to 21, **characterized in that** the network device sending a first message comprises: the network device sending the first message to the terminal device, wherein the first message is measurement configuration information.

25. The method according to claim 24, **characterized in that** the list of cells is used by the terminal device to perform measurement in combination with its device type.

26. The method according to claim 25, **characterized in that** the device type of the terminal device comprises a drone terminal device and/or a ground terminal device.

27. The method according to claim 25 or 26, **characterized in that** the device type of the terminal device is determined by at least one of: determination by the terminal device, determination by network authentication, determination based on altitude of the terminal device, determination based on an operation mode of the terminal device, configuration by the network device..

28. The method according to claim 27, **characterized in that** if the altitude of the terminal device is greater than a first threshold, the device type of the terminal device is a drone terminal device; or, if the altitude of the terminal device is less than or equal to a first threshold, the device type of the terminal device is a ground terminal device.

29. The method according to claim 27 or 28, **characterized in that** if the terminal device is in take-off mode and/or landing mode, the device type of the terminal device is a ground terminal device;

>    or
>    if the terminal device is in horizontal flight mode, the device type of the terminal device is a drone terminal device.

30. The method according to any of claims 18 to 29, **characterized in that** the list of cells is used for the terminal device to perform cell selection or cell reselection if the terminal device is in an idle state or an inactive state; or the list of cells is used for the terminal device to perform cell measurement if the terminal device is in a connected state.

31. A terminal device, **characterized by** comprising:

a processing unit for obtaining a list of cells;
wherein the processing unit is further used to perform cell selection, cell reselection, or cell measurement based on its device type and the list of cells.

32. The terminal device according to claim 31, **characterized in that** the processing unit is specifically used to:

determine at least one neighbor cell based on its device type and the list of cells, the at least one neighbor cell is for cell selection or cell reselection, or, the at least one neighbor cell is for measurement;
select a neighbor cell among the at least one neighbor cell for cell selection or reselection, or, the terminal device performs a measurement of the at least one neighbor cell.

33. The terminal device according to claim 32, **characterized in that** the list of cells comprises a list of drone cells and/or a list of terrestrial cells;
the processing unit is specifically used to:

determine the at least one neighbor cell among the cells in the list of drone cells, if the device type of the terminal device is a drone terminal device, or determine the at least one neighbor cell among cells other than the cells in the list of terrestrial cells; or
if the device type of the terminal device is a ground terminal device, determine the at least one neighbor cell among the cells in the list of terrestrial cells, or determine the at least one neighbor cell among cells other than the cells in the list of drone cells, or determine the at least one neighbor cell among cells other than the cells in the list of drone cells and cells in an intra-frequency reselection black cell list.

34. The terminal device according to claim 33, **characterized in that** when the list of cells comprises a list of drone cells, the list of drone cells comprises at least one of a drone cell deletion list, a drone cell addition or modification list, and a drone cell update list.

35. The terminal device according to claim 33 or 34, **characterized in that** when the list of cells comprises a list of terrestrial cells, the list of terrestrial cells comprises at least one of a terrestrial cell deletion list, a terrestrial cell addition or modification list, and a terrestrial cell update list.

36. The terminal device according to any of claims 32 to 35, **characterized in that** the processing unit is specifically used to:

select among the at least one neighbor cell a neighbor cell with the best channel quality for cell selection or cell reselection.

37. The terminal device according to any of claims 32 to 35, **characterized in that** the processing unit is specifically used to:

select a first neighbor cell among the at least one neighbor cell for cell selection or cell reselection,
wherein the first neighbor cell is a cell with the highest ranking in a list of preferred cells among the at least one neighbor cell.

38. The terminal device according to claim 37, **characterized in that** the list of preferred cells is configured for the network device.

39. The terminal device according to any of claims 32 to 38, **characterized in that** if the terminal device performs cell selection or cell reselection based on its device type and the list of cells, the processing unit is further used to measure channel quality of a serving cell and the at least one neighbor cell.

40. The terminal device according to any of claims 31 to 39, **characterized in that** the terminal device has a plurality of device types, the processing unit being specifically used to:
perform cell selection, cell reselection, or cell measurement based on its current device type and the list of cells.

41. The terminal device according to any of claims 31 to 40, **characterized in that** the device type of the terminal device comprises a drone terminal device and/or a ground terminal device.

42. The terminal device according to any of claims 31 to 41, **characterized in that** the device type of the terminal device is determined by at least one of: determination by the terminal device, determination by network authentication, determination based on altitude of the terminal device, determination based on an operation mode of the terminal device, configuration by the network device..

43. The terminal device according to claim 42, **characterized in that** if the altitude of the terminal device is greater than the first threshold, the device type of the terminal device is a drone terminal device; or
if the altitude of the terminal device is less than or equal to the first threshold, the device type of the terminal device is a ground terminal device.

44. The terminal device according to claim 42 or 43, **characterized in that**, if the terminal device is in take-off mode and/or landing mode, the device type of the terminal device is a ground terminal device; or if the terminal device is in horizontal flight mode, the device type of the terminal device is a drone terminal device.

45. The terminal device according to any of claims 31 to 44, **characterized in that**, if the terminal device is in an idle state or inactive state, the terminal device performs cell selection or cell reselection based on its device type and the list of cells; or
if the terminal device is in a connected state, the terminal device performs measurement based on its device type and the list of cells.

46. The terminal device according to any of claims 31 to 45, **characterized in that** if the terminal device performs cell selection or cell reselection based on its device type and the list of cells, the terminal device further comprises:
a communication unit for receiving a system message of a serving cell, the system message comprising the list of cells.

47. The terminal device according to any of claims 31 to 46, **characterized in that** the list of cells is pre-configured.

48. A network device, **characterized by** comprising:

a communication unit for sending a first message, the first message comprising a list of cells, wherein the list of cells is used by a terminal device for cell selection, cell reselection, or cell measurement.

49. The network device according to claim 48, **characterized in that** the list of cells comprises a list of drone cells and/or a list of terrestrial cells.

50. The network device according to claim 49, **characterized in that** the list of drone cells comprises at least one of a drone cell deletion list, a drone cell addition or modification list, and a drone cell update list.

51. The network device according to claim 49 or 50, **characterized in that** the list of terrestrial cells comprises at least one of a terrestrial cell deletion list, a terrestrial cell addition or modification list, and a terrestrial cell update list.

52. The network device according to any of claims 48 to 51, **characterized in that** the communication unit is specifically used to:
broadcast the first message, wherein the first message is a system message.

53. The network device according to claim 52, **characterized in that** the list of cells is used by the terminal device for cell selection or cell reselection.

54. The network device according to any of claims 48 to 51, **characterized in that** the communication unit is specifically used to:
send the first message to the terminal device, wherein the first message is measurement configuration information.

55. The network device according to claim 54, **characterized in that** the list of cells is used for the terminal device to perform measurement in combination with its device type.

56. The network device according to claim 55, **characterized in that** the device type of the terminal device comprises a drone terminal device and/or a ground terminal device.

57. The network device according to claim 55 or 56, **characterized in that** the device type of the terminal device is determined by at least one of: determination by the terminal device, determination by network authentication, determination based on altitude of the terminal device, determination based on an operation mode of the terminal device, configuration by the network device.

58. The network device according to claim 57, **characterized in that** if the altitude of the terminal device is greater than a first threshold, the device type of the terminal device is a drone terminal device; or if the altitude of the terminal device is less than or equal to the first threshold, the device type of the terminal device is a ground terminal device.

59. The network device according to claim 57 or 58, **characterized in that** if the terminal device is in take-off mode and/or landing mode, the device type of the terminal device is a ground terminal device; or if the terminal device is in horizontal flight mode, the device type of the terminal device is a drone terminal device.

60. The network device according to any of claims 48 to 59, **characterized in that** the list of cells is used for cell selection or cell reselection by the terminal device if the terminal device is in an idle state or an inactive state; or
the list of cells is used for cell measurement by the terminal device if the terminal device is in a connected state.

61. A terminal device **characterized by** comprising:

a processor; and

a memory for storing a computer program, wherein the processor is configured to call and execute the computer program stored in the memory and perform a method as claimed in any of claims 1 to 17.

62. A network device, **characterized by** comprising:

a processor; and
a memory for storing a computer program, wherein the processor is configured to call and execute the computer program stored in the memory and perform a method as claimed in any of claims 18 to 30.

63. A device **characterized by** comprising:
a processor configured to call and execute a computer program from the memory, causing an apparatus in which the device is installed to perform the method as claimed in any of claims 1 to 17.

64. A device **characterized by** comprising:
a processor configured to call and execute a computer program from a memory, causing an apparatus in which the device is installed to perform the method as claimed in any of claims 18 to 30.

65. A computer readable storage medium **characterized by** storing a computer program, the computer program causing a computer to perform the method as claimed in any of claims 1 to 17.

66. A computer readable storage medium **characterized by** storing a computer program, the computer program causing a computer to perform the method as claimed in any of claims 18 to 30.

67. A computer program product **characterized by** comprising computer program instructions that causes a computer to perform the method as claimed in any of claims 1 to 17.

68. A computer program product **characterized by** comprising computer program instructions that cause a computer to perform the method as claimed in any of claims 18 to 30.

69. A computer program **characterized in that** the computer program causes a computer to perform the method as claimed in any of claims 1 to 17.

70. A computer program **characterized in that** the computer program causes a computer to perform the method as claimed in any of claims 18 to 30.

**100**

120          110          120

FIG. 1

**200** | Terminal device obtains a list of cells | ∼ S210

The terminal device performs cell selection, cell reselection, or measurement according to its device type and the list of cells | ∼ S220

FIG. 2

**300**

START

S310

A network device sends a first message, the first message comprising a list of cells, wherein the list of cells is used by the terminal device for cell selection, cell reselection, or measurement

END

FIG. 3

Terminal device 400

Processing unit 410

FIG. 4

Terminal device 500

Communication unit 510

FIG. 5

Communication device
600

Memory
620

Processor
610

Transceiver
630

FIG. 6

Device 700

Input interface 730

Processor 710

Memory 720

Output interface 740

FIG. 7

Communication System 800

Terminal device

810

Network device

820

FIG. 8

## INTERNATIONAL SEARCH REPORT

| International application No. |
|---|
| **PCT/CN2019/100068** |

**A.    CLASSIFICATION OF SUBJECT MATTER**

H04W 36/00(2009.01)i

According to International Patent Classification (IPC) or to both national classification and IPC

**B.    FIELDS SEARCHED**

Minimum documentation searched (classification system followed by classification symbols)

H04W; H04Q; H04B

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IEEE: 小区, 列表, 选择, 重选, 测量, 设备, 终端, 类型, 种类, cell, list, choose, select, survey, measure, device, terminal, type

**C.    DOCUMENTS CONSIDERED TO BE RELEVANT**

| Category* | Citation of document, with indication, where appropriate, of the relevant passages | Relevant to claim No. |
|---|---|---|
| X | CN 109803332 A (HUAWEI TECHNOLOGIES CO., LTD.) 24 May 2019 (2019-05-24) description, paragraphs [0004]-[0045], and figures 1-9 | 1-70 |
| A | CN 107404756 A (XI'AN ZTE NEW SOFTWARE CO., LTD.) 28 November 2017 (2017-11-28) entire document | 1-70 |
| A | CN 109005574 A (NUBIA TECHNOLOGY CO., LTD.) 14 December 2018 (2018-12-14) entire document | 1-70 |
| A | US 2017367120 A1 (CONVIDA WIRELESS, LLC) 21 December 2017 (2017-12-21) entire document | 1-70 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 April 2020** | **09 May 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2019/100068**

| Patent document cited in search report | | | Publication date (day/month/year) | Patent family member(s) | | | Publication date (day/month/year) |
|---|---|---|---|---|---|---|---|
| CN | 109803332 | A | 24 May 2019 | CN | 110381553 | A | 25 October 2019 |
| | | | | WO | 2019096020 | A1 | 23 May 2019 |
| CN | 107404756 | A | 28 November 2017 | WO | 2017197834 | A1 | 23 November 2017 |
| CN | 109005574 | A | 14 December 2018 | | None | | |
| US | 2017367120 | A1 | 21 December 2017 | KR | 20190018170 | A | 21 February 2019 |
| | | | | EP | 3473048 | A1 | 24 April 2019 |
| | | | | US | 2019098672 | A1 | 28 March 2019 |
| | | | | WO | 2017218762 | A1 | 21 December 2017 |
| | | | | JP | 2019524031 | A | 29 August 2019 |
| | | | | CN | 109644494 | A | 16 April 2019 |

Form PCT/ISA/210 (patent family annex) (January 2015)